Europäisches Patentamt

European Patent Office

Office européen des brevets

(11) Publication number: **0 373 516**
**A1**

## (12) EUROPEAN PATENT APPLICATION

(21) Application number: 89122615.1

(51) Int. Cl.⁵: **F16J 1/02, F16J 1/08**

(22) Date of filing: 07.12.89

(30) Priority: 10.12.88 GB 8828918

(43) Date of publication of application:
20.06.90 Bulletin 90/25

(84) Designated Contracting States:
DE FR IT

(71) Applicant: **T&N TECHNOLOGY LIMITED**
**Cawston House Cawston**
**Rugby Warwickshire, CV22 7SB(GB)**

(72) Inventor: **Parker, David A.**
**Orchard Bungalow**
**Broadwell Rugby Warwickshire(GB)**
Inventor: **Slee, Roger Harvey**
**28 Oakwood Grove**
**Warwick CV34 5TD(GB)**

(74) Representative: **Goddard, David John et al**
**Bowdon House Ashburton Road West**
**Trafford Park**
**Manchester M17 1RA(GB)**

(54) Pistons.

(57) Pistons are described having conduits (24) lying within the boundaries of the thrust face bearing zones (40), the conduits communicating with the interior (26) of the piston and intended to supply lubricant to the bearing zones. Preferably, there are also depressions or grooves (20) lying within the bearing zone boundaries to assist in the distribution of lubricant.

FIG.1

## Pistons

The present invention relates to pistons, particularly though not exclusively, for internal combustion engines.

It is well known that lubrication of the load bearing thrust faces of a piston in an internal combustion engine is critical. This is particularly so when the attainable mean piston speed exceeds 12 m/sec and the specific output of the engine exceeds 70 hp/litre.

In order to sustain a lubricating oil film on the sliding thrust faces of a piston it is frequently the practice to provide the axial skirt profile with a slight "barrelled" form, which allows a slight rolling action of the piston within the cylinder, particularly in the regions of stroke reversal. It is also frequent practice to vary the polar profile of the piston so as to achieve a desired bearing zone (so called "bedding pattern") on both of the thrust faces of the piston. The bearing zone may subtend an arc of approximately 20° either side of the plane which includes both the piston axis and the normal to the gudgeon pin axis.

Whilst such features may often suffice in providing satisfactory operation, modern high performance engines may be called upon to operate for extended periods at very high speeds and power outputs. Under such conditions, oils may reach 130°C to 150°C, depressing the apparent viscosity of typical SAE 20W/50 lubricants to nearer SAE 5. In such circumstances, lubrication of the piston thrust faces may become marginal and "scuffing" may result.

It is known to provide the piston thrust faces with shallow peripheral grooves, strategically positioned on the piston skirt and acting as auxilliary oil distribution pockets. Such pockets may provide some amelioration of potential scuffing due to improved "wetting" of the highly loaded zone.

GB 578468 describes chevron shaped grooves at the base of the piston, having direct access to crankcase oil spray from the crank-pin journal, provided that the piston protrudes from the cylinder bore at BDC. Similarly, US 1760122 describes wide depressions low down on the skirt thrust faces; down stroke of the piston causes oil to flow up, and around, curved oil receiving throats into the thrust face depressions. None of these features are really effective in achieving the ideal lubrication conditions since either the lubrication grooves are laterally open ended allowing escape of lubricant from the extremities, or the lubricant supply to the grooves is inadequate and relies solely on oil squeezed and scraped from the cylinder wall. Not only is this oil film extremely thin, but is also variable around the cylinder periphery.

European patent application No 86200553.5 describes shallow depressions on the piston thrust faces the lateral ends of which lie within the bearing zone of the piston thrust faces. Such oil as is accumulated within these depressions, is therefore retained during reciprocation of the piston in the cylinder and aids both lubrication and cushioning of the piston against the cylinder wall. There is no means however, of ensuring than the supply of oil to the depressions is replenished during reciprocation of the piston especially towards the top of its stroke.

The present invention has, as a primary objective a means of both ensuring a reliable, positive and controlled delivery of lubricant to the skirt thrust faces of the piston.

According to the present invention there is provided a piston for an internal combustion engine, the piston having a crown portion and a skirt portion which both define, on their internal surfaces, a cavity within the piston, open at the end remote from the crown, the skirt portion comprising two thrust faces each having at least one bearing zone and a plurality of conduits communicating between the bearing zones of the thrust faces and the cavity of the piston, the conduits lying within the boundary of each bearing zone.

Preferably, the conduits communicate with depressions or grooves lying in the piston bearing zone.

The depressions or grooves may be generally peripherally extending.

Preferably, the conduits may be positioned so as to intercept the oil sprayed and centrifuged out from either side of the crank pin bearing. The conduits may be formed either radially outwards with regard to the piston axis or may be generally parallel with one another.

Where shallow grooves or depressions are employed there may be a conduit situated in the region of each lateral extremity of each groove or depression.

Preferably, the conduits may be in the form of holes having a diameter within the range of 1 to 1.5 mm dia.

We have found that oil situated in the interior opening of the conduits is subjected to a strong outwardly acceleration towards the thrust face by the action of transverse forces generated in the vicinity of both the dead centre positions during piston travel reversal. This acceleration is strongest at the top dead centre (tdc) position during the firing stroke. Once oil droplets have found their way into the associated grooves or onto the associated thrust face, they expand laterally. Although there is a complimentary or reverse acceleration field at the next dead centre position, only a portion of the oil flows back down the conduits. Hence there is a nett outflow of oil from the interior to the thrust faces of the piston.

The most advantageous zone for positioning the thrust face grooves and conduits is 30 to 80% of the distance up the piston thrust face from the lower open end; since in practice this is where heaviest loading occurs.

Preferably the lateral depressions or grooves may extend for approximately 80% of the peripheral length of the loaded thrust bearing zone. The depressions or grooves may be laterally open ended but the efficiency of lubrication of the bearing zone is somewhat reduced in comparison to grooves having closed ends lying within the bearing zone and which is the preferred construction.

The depressions or grooves where present may vary in depth from about 0.2mm to 1mm and preferably have a Vee or part circular cross sectional profile. Other cross sectional profiles may be used. Depressions or grooves shallower than 0.2 mm tend to become blocked with wear particles, carbonaceous debris and sludge rather rapidly.

Depressions or grooves may alternatively be in the form of an interconnecting open diamond pattern formed, for example, by a flattened knurling type tool wherein the conduits from the interior space of the piston interconnect with the diamond pattern. Other types of pattern may alternatively be used. Groove patterns, formed by chemical etching or machining may, for example, be used.

In order that the present invention may be more fully understood, an example will now be described by way of illustration only with reference to the accompanying drawings, of which;

Figure 1 shows in elevation a part cross section of a piston according to the present invention;

Figure 2 shows a perspective view of a piston according to the present invention; and

Figure 3 which shows graphs of the lateral acceleration of the piston during travel reversal on the thrust and non-thrust sides.

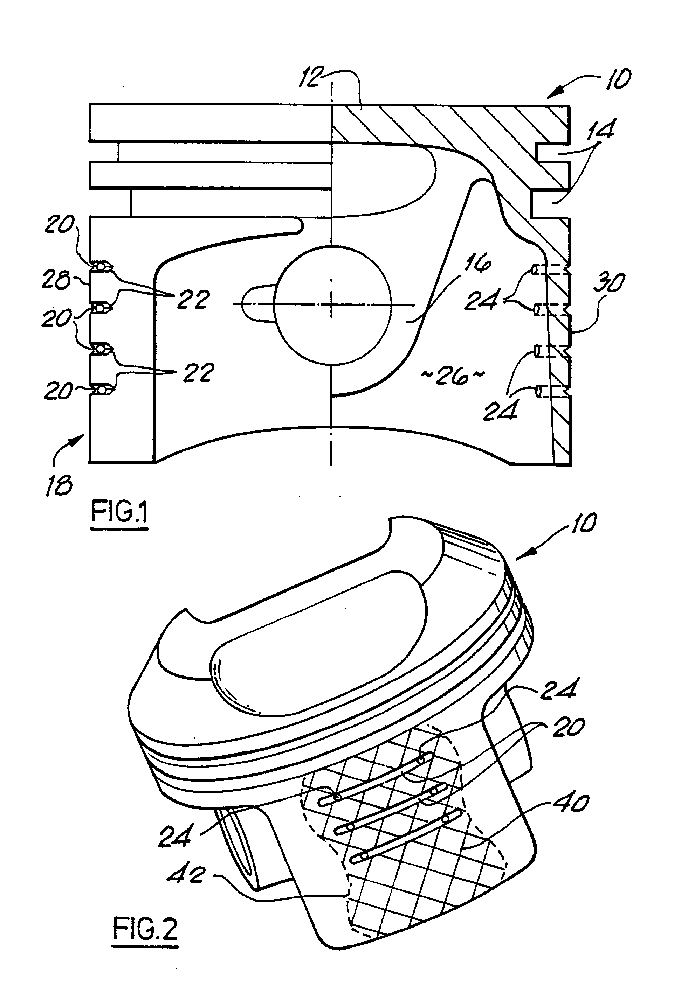

Referring now to Figures 1 and 2 and where similar features are identified by common reference numerals.

In Figure 1 a piston is shown generally at 10. The left hand half of the drawing shows the piston viewed in a direction parallel to the gudgeon pin axis and the right hand half shows a section of the piston when viewed in the same direction. The piston comprises a crown 12, piston ring grooves 14, gudgeon pin bosses 16 and a skirt 18. The skirt 18 has peripherally directed grooves 20 having closed ends 22. Conduits 24 in the form of drilled holes are adjacent the closed ends 22. The conduits communicate between the interior volume 26 of the piston and both thrust faces 28 and 30.

Figure 2 shows a so called "slipper" type of piston 10. Having grooves 20 and conduits 24. The bearing area 40 is shown as a cross-hatched area having a boundary 42 shown by a dotted line.

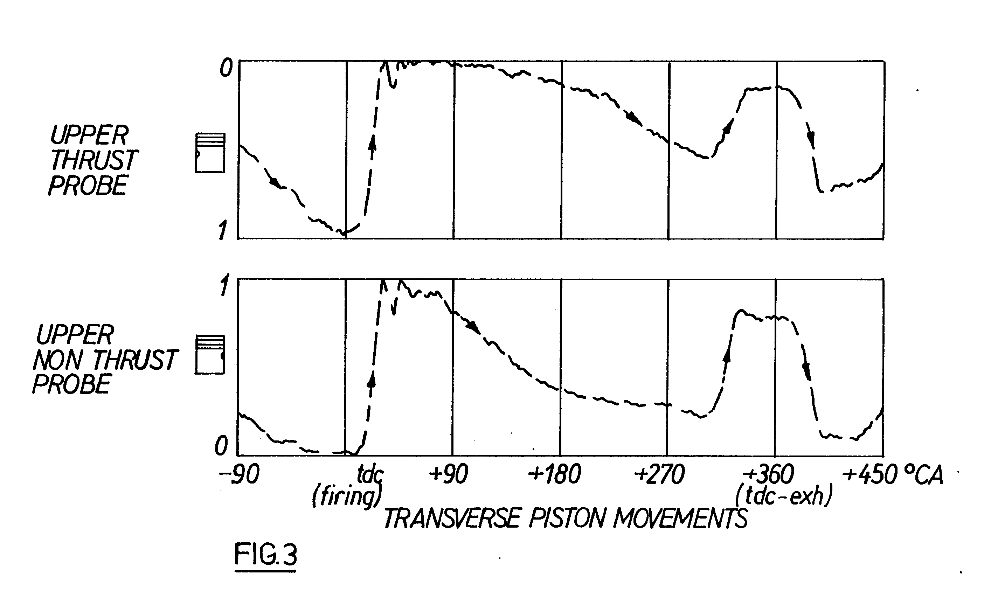

Figure 3 shows graphs of the lateral acceleration of the piston versus the engine crank angle and combustion cycle stage of a four stroke engine. The upper trace shows the acceleration recorded from a probe mounted on the thrust face of the piston whilst the lower trace records the acceleration on the counter thrust-face. It may be seen that the lateral acceleration at the tdc position during firing of the fuel charge is by far the greatest. The lateral acceleration during piston travel reversal at the exhaust (+ 360°) tdc position is, however, sufficient to ensure passage of oil through the conduits 24 onto the piston thrust faces 28 and 30.

## Claims

1. A piston (10) for an internal combustion engine, the piston having a crown portion (12) and a skirt portion (18) which both define, on their internal surfaces, a cavity (26) within the piston, open at the end remote from the crown, the skirt portion comprising two thrust faces (28, 30) each having at least one bearing zone (40) characterised by a plurality of conduits (24) communicating between the bearing zones of the thrust faces and the cavity of the piston, the conduits lying within the boundary of (42) each bearing zone.

2. A piston according to Claim 1 characterised in that the conduits (24) communicate with depressions or grooves (20) lying in the bearing zones.

3. A piston according to Claim 2 characterised in that the depressions or grooves are generally peripherally extending.

4. A piston according to Claim 2 characterised in that the depressions or grooves (20) are in the form of an interconnecting pattern.

5. A piston according to any one preceding claim characterised in that the conduits (24) are formed in a direction which is radial with regard to the piston axis.

6. A piston according to any one preceding claim from 1 to 4 characterised in that the conduits are formed generally parallel with one another.

7. A piston according to Claim 3 characterised in that the conduits (24) are situated in the region of the peripheral extremities (22) of each depression or groove (20).

8. A piston according to any one preceding claim characterised in that the conduits are holes having a diameter in the range from 1 to 1.5mm.

9. A piston according to any one preceding claim characterised in that the conduits are situated in the region from 30 to 80% of the distance up the piston thrust face from the open end.

10. A piston according to any one preceding claim from 2 to 9 characterised in that the depressions or grooves are situated in the region from 30 to 80% of the distance up the piston thrust face from the lower open end.

11. A piston according to any one of preceding Claims 2 to 10 characterised in that the depressions or grooves extend for approximately 80% of the peripheral length of the loaded thrust bearing zone.

12. A piston according to any one of preceding Claims 2 to 11 characterised in that the depressions or grooves have a Vee or part-circular cross sectional profile.

13. A piston according to any one preceding claim from 2 to 12 characterised in that the depth of the depressions or grooves lies in the range from 0.2 to 1mm.

FIG.1

FIG.2

UPPER THRUST PROBE

UPPER NON THRUST PROBE

−90    tdc    +90    +180    +270    +360    +450 °CA
      (firing)                              (tdc-exh)

TRANSVERSE PISTON MOVEMENTS

FIG.3

EP 0 373 516 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3518720 (MAN) <br> * the whole document * | 1-3, 5, 7, 9 | F16J1/02 <br> F16J1/08 |
| X | GB-A-154845 (ROGATCHOFF) <br> * the whole document * | 1-3, 6, 7 | |
| X | GB-A-191181 (HOLWORTHY) <br> * the whole document * | 1-3, 9, 12 | |
| A | US-A-1492308 (NIEMI) <br> * the whole document * | 1-4, 12, 13 | |
| A | US-A-3721163 (WELLWORTHY LTD) <br> * the whole document * | 1, 12, 13 | |

TECHNICAL FIELDS
SEARCHED (Int. Cl.5)

F16J

The present search report has been drawn up for all claims

| Place of search | Date of completion of the search | Examiner |
|---|---|---|
| THE HAGUE | 27 FEBRUARY 1990 | WASSENAAR G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)